# EUROPEAN PATENT SPECIFICATION

(11) **EP 4 276 992 B1**
(45) Date of publication and mention of the grant of the patent: **16.07.2025**
(21) Application number: 22890279.7
(22) Date of filing: 27.10.2022
(51) Int. Cl.: H01M 50/24, H01M 50/247, H01M 50/242, H01M 50/209, H01M 50/207, H01M 50/244

(54) **BATTERY MODULE**
BATTERIEMODUL
MODULE DE BATTERIE

(30) Priority: 02.11.2021 KR 20210148645
(43) Date of publication of application: 15.11.2023
(73) Proprietor: LG Energy Solution, Ltd., Seoul 07335 (KR)
(72) Inventor: HUANG, Chien-Pin, Taipei City, 11494 (TW)
(74) Representative: Plasseraud IP
(86) International application number: PCT/KR2022/016603
(87) International publication number: WO 2023/080544

(56) References cited:
- JP-A- 2002 231 300
- JP-A- 2002 231 300
- JP-A- 2021 150 003
- JP-A- 2021 150 003
- KR-A- 20190 127 314
- KR-A- 20200 098 804
- KR-B1- 102 172 517
- US-B2- 10 971 770

## Description

### TECHNICAL FIELD

The present disclosure relates to an electronic assembly, and more particularly, to a battery module. The present application claims priority to Korean Patent Application No. 10-2021-0148645 filed on November 2, 2021 in the Republic of Korea.

### BACKGROUND ART

Mobile electronic products (for example, laptop computers) include battery modules to supply necessary power. A battery module includes an insulating sheet on bottom to protect a battery unit inside, but when a drop test or pressure test is performed on the electronic product and/or the battery module, in some instances, it fails the test due to the lack of structural strength on bottom of the battery module.

JP2002231300A concerns a rectangular sealed battery and its manufacturing method.

US10,971,770B2 discloses a battery pack having a crash beam structure. JP2021150003A discloses a battery pack including a thin secondary battery cell.

### DISCLOSURE

### Technical Problem

The present disclosure is directed to providing a battery module with enhanced structural strength.

### Technical Solution

The invention is set out in the appended set of claims.

### Advantageous Effects

As described above, in the battery module of the present disclosure, the structurally enhancing portion of the carrying structure is extended outward from the outer surface of the insulating sheet, thereby enhancing the structural strength on the outer surface of the battery module. Accordingly, when a drop test or a pressure test is performed on the battery module, the battery module can withstand a larger external force at the outer surface, thereby easily passing the test.

### DESCRIPTION OF DRAWINGS

FIG. 1 is a perspective view of a battery module according to an embodiment of the present disclosure.
FIG. 2 is an exploded view of the battery module of FIG. 1.
FIG. 3 is an exploded view of parts of the battery module of FIG. 1.
FIG. 4 is a perspective view of the battery module of FIG. 1 when viewed from another perspective.
FIG. 5 is a bottom view of parts of the battery module of FIG. 1.
FIG. 6 is a partial side view of the battery module of FIG. 5.
FIG. 7 is a cross-sectional view of the battery module of FIG. 1.
FIG. 8 is a diagram showing the assembly of the insulating sheet of FIG. 7 in a carrying structure.

### BEST MODE

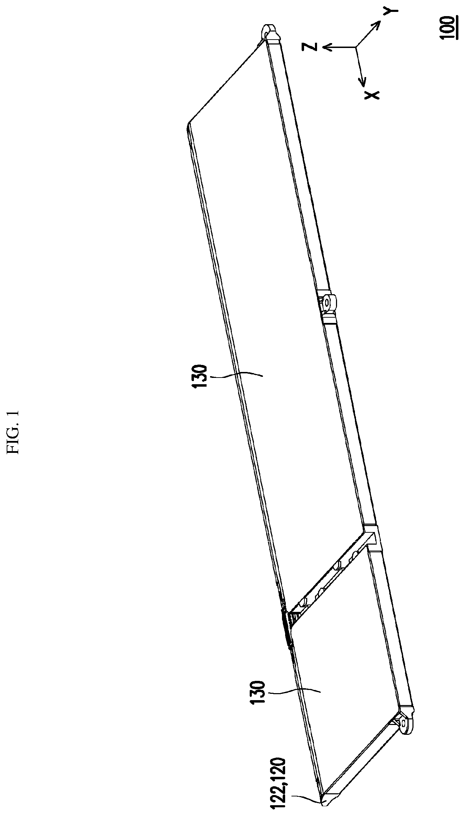

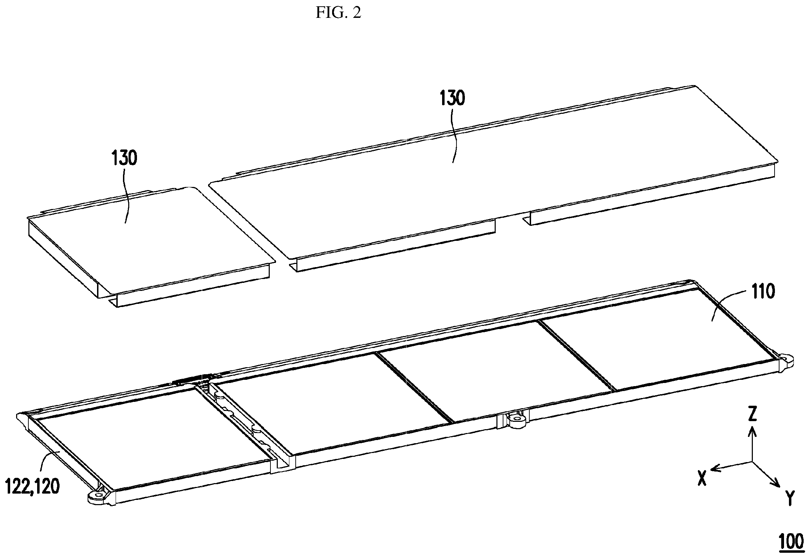

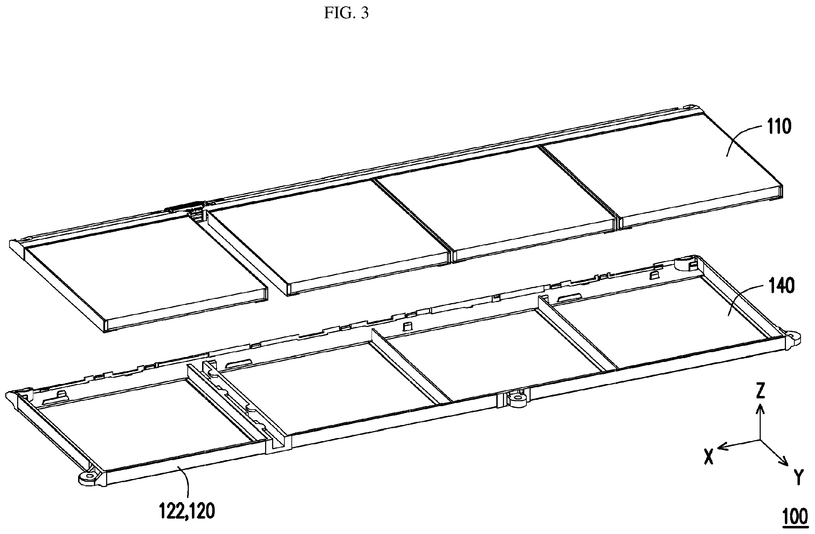

FIG. 1 is a perspective view of a battery module according to an embodiment of the present disclosure, FIG. 2 is an exploded view of the battery module of FIG. 1, and FIG. 3 is an exploded view of parts of the battery module of FIG. 1.

Referring to FIGS. 1 to 3, the battery module 100 according to this embodiment is, for example, a battery module used in laptop computers or any other types of electronic products, and includes at least one battery unit 110 (a plurality of battery units as shown), a carrying structure 120, at least one insulating layer 130 and at least one insulating sheet 140 (a plurality of insulating sheets as shown). The carrying structure 120 is made of plastic and includes a frame 122, and the frame 122 mounts a battery unit 110. The insulating layer 130 is, for example, a sheet material (for example, Mylar) to provide insulation, fireproofing and labeling functions, and covers the battery unit 110 and the carrying structure 120 at least in part by bonding or any other appropriate method. The insulating sheet 140 is, for example, a plastic sheet material and is installed in the carrying structure 120 to cover one side of the battery unit 110, and the insulating layer 130 covers the other side of the battery unit 110.

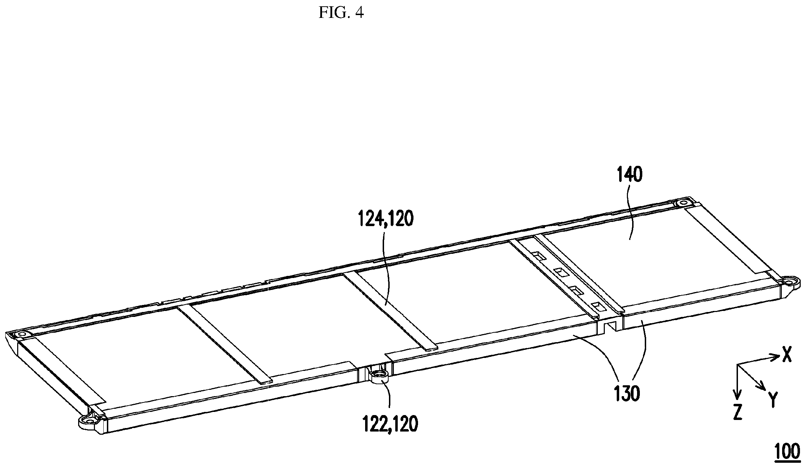

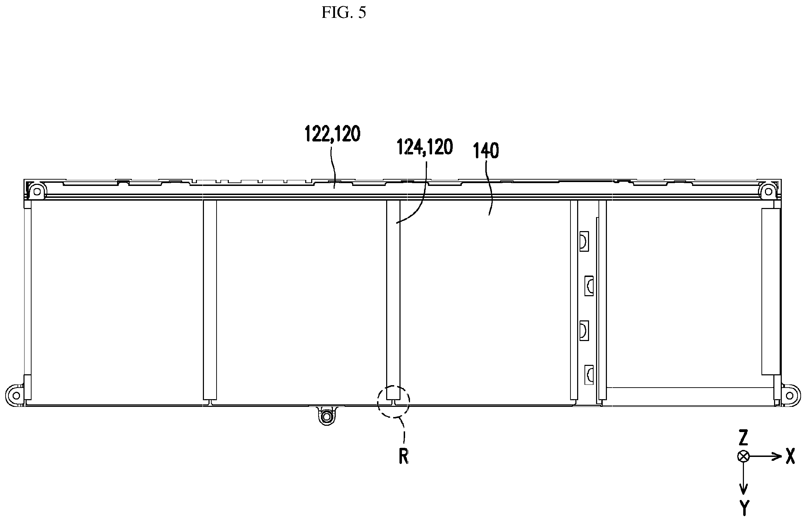

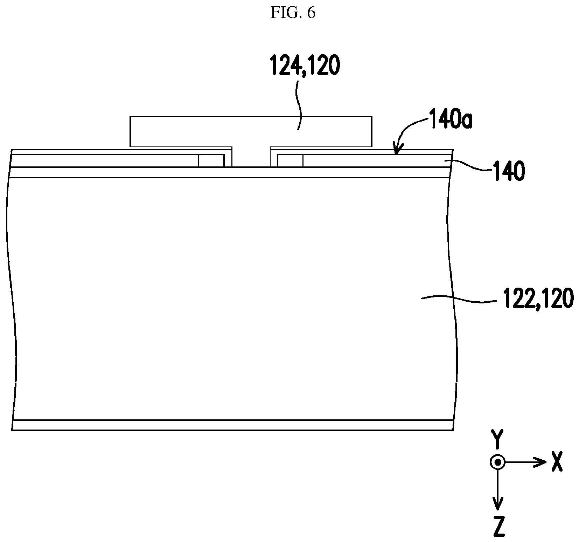

FIG. 4 is a perspective view of the battery module of FIG. 1 when viewed from another perspective, FIG. 5 is a bottom view of parts of the battery module of FIG. 1, and FIG. 6 is a partial side view of the battery module of FIG. 5, showing section R in FIG. 5.

Referring to FIGS. 4 to 6, the carrying structure 120 according to this embodiment also includes at least one structurally enhancing portion 124, the structurally enhancing portion 124 is integrally connected to the frame 122, and is extended outward of the battery module 100 from an outer surface 140a of the insulating sheet 140 in a direction opposite to the axial direction Z. Additionally, the structurally enhancing portion 124 is extended onto the outer surface 140a of the insulating sheet 140 along a direction parallel to the axial direction X. Through the installation of the structurally enhancing portion 124, the battery module 100 may have the enhanced structural strength at the outer surface 140a. Accordingly, when a drop test or a pressure test is performed on the battery module 100, the battery module 100 can withstand a larger external force at the outer surface 140a, thereby easily passing the test.

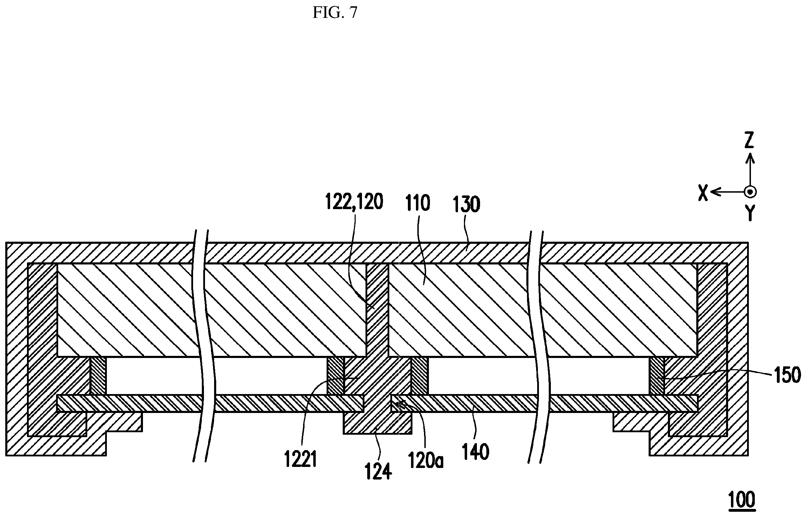

FIG. 7 is a cross-sectional view of the battery module of FIG. 1. Referring to FIG. 7, specifically, the frame 122 according to this embodiment includes at least one support 1221 (a plurality of supports as shown), and the battery unit 110 is supported by one side of the support 1221, and the structurally enhancing portion 124 is extended from the other side of the support 1221. A groove 120a is present between the support 1221 and the structurally enhancing portion 124, and the edge of the insulating sheet 140 is disposed inside the groove 120a.

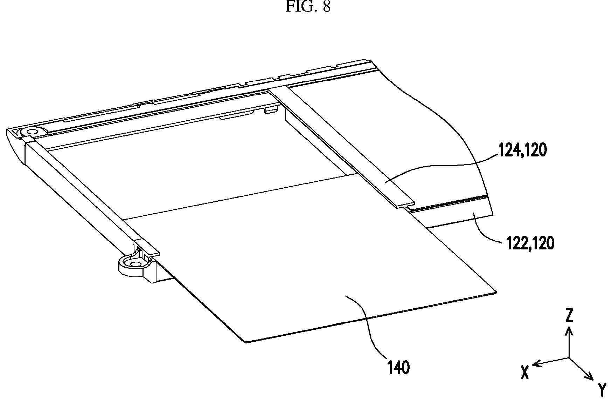

FIG. 8 is a diagram showing the assembly of the insulating sheet of FIG. 7 in the carrying structure. In the process of assembling the battery module 100, as shown in FIG. 8, a user slidably inserts the insulating sheet 140 into the groove 120a (shown in FIG. 7) in a direction opposite to the axial direction Y to couple the carrying structure 120 and the plurality of insulating sheets 140 as shown in FIG. 3. The connection between the insulating sheet 140 and the frame 122 is enhanced using a photo-hardenable adhesive 150 (shown in FIG. 7) or any other type of adhesive. Subsequently, the plurality of battery units 110 in FIG. 3 is mounted in the frame 122 of the carrying structure 120 to couple the carrying structure 120 and the plurality of battery units 110 as shown in FIG. 2. Additionally, the insulating layer130 in FIG. 2 is attached to the battery unit 110 and the carrying structure 120 to complete the assembly of the battery module 100 as shown in FIG. 1.

As described above, in the battery module according to the present disclosure, the structurally enhancing portion of the carrying structure is extended outward from the outer surface of the insulating sheet, thereby enhancing the structural strength on the outer surface of the battery module. Accordingly, when a drop test or a pressure test is performed on the battery module, the battery module can withstand a larger external force at the outer surface, thereby easily passing the test.

### [Description of reference numerals]

100: Battery module
110: Battery unit
120: Carrying structure
120a: Groove
122: Frame
1221: Support
124: Structurally enhancing portion
130: Insulating layer
140: Insulating sheet
140a: Outer surface
150: Photo-hardenable adhesive
R: Region
X,Y,Z: Axial direction

## Claims

1. A battery module (100), comprising:
at least one battery unit (110), a carrying structure (120) and at least one insulating sheet (140),
wherein the carrying structure (120) includes a frame (122) and at least one structurally enhancing portion (124) connected to each other, and the frame (122) mounts the at least one battery unit (110),
wherein the insulating sheet (140) is installed in the carrying structure (120) to cover the at least one battery unit (110), and
wherein the at least one structurally enhancing portion (124) is extended outward of the battery module (100) from an outer surface (140a) of the at least one insulating sheet (140) and onto the outer surface (140a) of the at least one insulating sheet (140).

2. The battery module (100) according to claim 1, wherein the frame (122) includes at least one support (1221), the at least one battery unit (110) is supported by one side of the at least one support (1221), and the at least one structurally enhancing portion (124) is extended to the other side of the at least one support (1221).

3. The battery module (100) according to claim 2, wherein a groove (120a) is present between the at least one support (1221) and the at least one structurally enhancing portion (124), and an edge of the at least one insulating sheet (140) is disposed inside the groove (120a).

4. The battery module (100) according to claim 1, wherein the battery module (100) includes an insulating layer (130), the insulating layer covers at least part of the at least one battery unit (110) and the carrying structure (120), the at least one insulating sheet (140) covers one side of the at least one battery unit (110), and the insulating layer (130) covers the other side of the at least one battery unit (110).

## Patentansprüche

1. Batteriemodul (100), umfassend:
wenigstens eine Batterieeinheit (110), eine Tragestruktur (120) und wenigstens eine Isolierungsbahn (140), wobei
die Tragestruktur (120) einen Rahmen (122) und wenigstens einen strukturellen Verstärkungsabschnitt (124) umfasst, welche miteinander verbunden sind, und der Rahmen (122) die wenigstens eine Batterieeinheit (110) anbringt,
wobei die Isolierungsbahn (140) in der Tragestruktur (120) installiert ist, um die wenigstens eine Batterieeinheit (110) zu bedecken, und
wobei der wenigstens eine strukturelle Verstärkungsabschnitt (124) sich von dem Batteriemodul (100) von einer äußeren Fläche (140a) der wenigstens einen Isolierungsbahn (140) und auf die äußere Fläche (140a) der wenigstens einen Isolierungsbahn (140) erstreckt.

2. Batteriemodul (100) nach Anspruch 1, wobei der Rahmen (122) wenigstens eine Halterung (1221) umfasst, die wenigstens eine Batterieeinheit (110) durch eine Seite der wenigstens einen Halterung (1221) gehaltert ist, und sich der wenigstens eine strukturelle Verstärkungsabschnitt (124) zu der anderen Seite der wenigstens einen Halterung (1221) erstreckt.

3. Batteriemodul (100) nach Anspruch 2, wobei eine Nut (120a) zwischen der wenigstens einen Halterung (1221) und dem wenigstens einen strukturellen Verstärkungsabschnitt (124) vorliegt, und ein Rand der wenigstens einen Isolierungsbahn (140) in der Nut (120a) angeordnet ist.

4. Batteriemodul (100) nach Anspruch 1, wobei das Batteriemodul (100) eine Isolierungslage (130) umfasst, die Isolierungslage wenigstens einen Teil der wenigstens einen Batterieeinheit (110) und der Haltestruktur (120) bedeckt, die wenigstens eine Isolierungsbahn (140) eine Seite der wenigstens einen Batterieeinheit (110) bedeckt, und die Isolierungslage (130) die andere Seite der wenigstens einen Batterieeinheit (110) bedeckt.

## Revendications

1. Module de batterie (100), comprenant :
au moins une unité de batterie (110), une structure porteuse (120) et au moins une feuille isolante (140),
dans lequel la structure porteuse (120) inclut un cadre (122) et au moins une portion d'amélioration structurelle (124) reliés entre eux, et le cadre (122) monte l'au moins une unité de batterie (110),
dans lequel la feuille isolante (140) est installée dans la structure porteuse (120) pour recouvrir l'au moins une unité de batterie (110), et
dans lequel l'au moins une partie d'amélioration structurelle (124) est étendue vers l'extérieur du module de batterie (100) à partir d'une surface externe (140a) de l'au moins une feuille isolante (140) et sur la surface externe (140a) de l'au moins une feuille isolante (140).

2. Module de batterie (100) selon la revendication 1, dans lequel le cadre (122) inclut au moins un support (1221), l'au moins une unité de batterie (110) est supportée par un côté de l'au moins un support (1221), et l'au moins une partie d'amélioration structurelle (124) est étendue vers l'autre côté de l'au moins un support (1221).

3. Module de batterie (100) selon la revendication 2, dans lequel une rainure (120a) est présente entre l'au moins un support (1221) et l'au moins une partie d'amélioration structurelle (124), et un bord de l'au moins une feuille isolante (140) est disposé à l'intérieur de la rainure (120a).

4. Module de batterie (100) selon la revendication 1, dans lequel le module de batterie (100) inclut une couche isolante (130), la couche isolante recouvre au moins une partie de l'au moins une unité de batterie (110) et de la structure porteuse (120), l'au moins une feuille isolante (140) recouvre un côté de l'au moins une unité de batterie (110), et la couche isolante (130) recouvre l'autre côté de l'au moins une unité de batterie (110).
